# EUROPEAN PATENT APPLICATION

(11) **EP 1 918 895 A2**
(43) Date of publication of application: **07.05.2008**
(21) Application number: 08101854.1
(22) Date of filing: 27.08.2003
(51) Int. Cl.: G08G 1/0968, G08G 1/01, G08G 1/123, G01C 21/32

(54) **Apparatus and method for providing traffic information**

(30) Priority: 29.08.2002 GB 0220062; 09.04.2003 GB 0308188
(62) Divisional of application: 03791018.9
(71) Applicant: Itis Holdings Plc, Altrincham, Cheshire WA14 1PZ (GB)
(72) Inventor: Burr, Jonathan Charles, Cheshire WA15 9QA (GB); Gates, Gary, Wirral CH60 6TQ (GB); Slater, Alan George, Bolton BL1 5DZ (GB)
(74) Representative: Hill, Justin John

(57) **Abstract**

A system and method for providing traffic information is disclosed. In one embodiment, a method comprises, for each segment of a route between an origin point and a destination point, performing a time-dependent journey planning calculation, based on a time during which a vehicle is predicted to be travelling through the segment, to produce a segment result; forming at least one route result, the at least one route result being formed based on a plurality of the segment results; storing the at least one route result in a digital storage means; and accessing the rapid access means for use in responding to a user request for traffic information for a journey between the origin point and the destination point. In another embodiment, a method comprises pre-determining at least a portion of a recommended most economic route between an origin point and a destination point; storing the pre-determined portion of the recommended most economic route in a rapid access means in a digital storage means; and accessing the rapid access means for use in responding to a user request for traffic information for a journey between the origin point and the destination point. In another embodiment, a method comprises determining, with reference to a first network of geographical boundaries and a second network of digital map nodes, a recommended most economic route between an origin point and a destination point; and transmitting the recommended most economic route to a user.

## Description

### TECHNICAL FIELD

This invention relates to systems and methods for providing traffic information, and in particular to systems and methods for responding to user requests regarding the most economic route between an origin point and a destination point.

### BACKGROUND

Traffic and travel information is significant in calculating journey times, and avoiding congestion that delays individual route completion. There are a number of ways of obtaining traffic information and calculating travel time.

In the simplest form travel time is calculated mathematically by dividing the distance to be travelled (either estimated or taken from a map) by the average travel speed (either estimated or taken from an analysis of tachograph data in the case of heavy goods vehicles). Journey time and estimated time of arrival are not particularly accurate, and there is no real consideration of potential traffic congestion of either a long-term nature (for example, road works) or a short-term nature (for example, traffic accidents).

Commercial operations require a greater degree of accuracy to forecast travel times, particularly when using vehicle routing and scheduling techniques to plan vehicle journeys. As a result, traffic planners may use estimated speeds for different types of vehicles over different types of roads (for example, motorways, urban dual carriageways or road surge carriageway arterial roads). Computer based maps with algorithms which determine the shortest path between two points subsequently divides the route into road lengths by type of road and applies estimated speeds to obtain a journey time. Further developments of this technique have, where traffic congestion is known to occur, applied congestion parameters in the form of percentage achievement of the estimated journey time between specific times of the day for particular types of road (for example, urban motorways between 07.30 am and 10.00 am should be 60% of the estimated journey time). However, commercial operators who undertake comparisons of "planned" and "actual" journey times from the tachograph analysis still show significant differences, which are retrospectively found to be caused by traffic congestion.

Traffic congestion at the same location and same time, which is repeated either on consecutive days of the week or the same day of the week, is by its nature forecastable and can be accounted for in traffic planning. However, forecasting based on such repeated congestion does not take account of unpredictable congestion, and thus does not accurately relate the speed of a vehicle to an actual road length at a specific time of day.

Real time traffic information is also required by both drivers and commercial vehicle operators in order to avoid delays caused by unforecastable events such as traffic accidents. There are a number of different ways in which real time traffic information is obtained. The most reliable real time traffic information system is the "incident spotter," which may be a designated traffic incident reporter (for example, an Automobile Association traffic reporter on a motorbike) reporting traffic congestion to a central control, or a member of the general public (a driver located in traffic congestion) reporting incidents to a radio station by mobile telephone. Local radio stations may consolidate local traffic data from incident spotters, taxi firms, bus companies and the general public to enable them to broadcast real-time traffic information. Such information is normally vetted by means of many reports on the same incident then disseminated to the public by such means as traffic reports on the radio or by means of traffic information reports by cellular telephones. Such a system only reports incidents as they occur and the information is limited to the immediate vicinity of the incident. In addition the radio reports often continue to be broadcast long after the incident is cleared and traffic is proceeding normally because there is often no real verification process after the initial reports. Users may, based upon the information given, make their own informed choice to divert to an alternative route even when it may not be necessary to do so.

More accurate real-time systems use detectors, which are either sensors on road and bridges or cameras alongside the road that are linked to a local traffic reporting (or control) facility, thereby allowing the dissemination of real-time traffic information. Such detectors are normally located at potential traffic congestion points in order that early warning may be issued by the traffic control authority. Such information is often validated by the police or "incident spotters" and passed on to radio stations or organizations providing traffic information by means of cellular telephones. These systems tend to be geographically limited and again, information on an incident may be communicated well after it is cleared and traffic proceeding normally - unless there is a verification procedure which up-dates the situation on a regular basis.

Vehicles fitted with radio data systems with traffic messaging channels (RDS - TMC sytems) may also obtain local messaging and be able to process alternative routes through the vehicle navigation system, but this generally only occurs when the original route is either "closed" or "severely delayed".

The most accurate traffic information system currently available is the individual vehicle tracking and tracing system, which uses a vehicle fitted with a global positioning system (GPS) probe to detect the vehicle location. The vehicle's speed is determined based upon a number of location readings over time. In addition, the vehicle probe has a memory device which records time, data, location and speed at specific time intervals. The collection of such information, either in real-time using a cellular mobile telephone system (GSM) or GPRS, or after the event by radio data download, is known as the "floating vehicle data" (FVD ^{™}) technique. This data is both specific and customized to particular vehicles (operated by those requiring the traffic data), and timely insofar as the data can be collected either in real-time or historically. The extensive data may be analysed by type of vehicle, location (road length), time of day and day of the week. The greatest drawback with FVD ^{™} that is data only, is that it does not give the reason for any traffic congestion encountered. Such information is instead often available from other conventional sources in the public domain.

### SUMMARY

According to one aspect of the present invention, there is provided a method for providing traffic information.

In one embodiment according to the invention a method comprises, for each segment of a route between an origin point and a destination point, performing a time-dependent journey planning calculation, based on a time during which a vehicle is predicted to be travelling through the segment, to produce a segment result; forming at least one route result, the at least one route result being formed based on a plurality of the segment results; storing the at least one route result in a digital storage means; and accessing the rapid access means for use in responding to a user request for traffic information for a journey between the origin point and the destination point. Performing the time-dependent journey planning calculation for each segment may comprise determining a segment duration for traversing the segment based on a predicted vehicle speed for the segment at the time during which the vehicle is predicted to be travelling through the segment; or determining a predicted vehicle speed for traversing the segment based on the time during which the vehicle is predicted to be travelling through the segment. Forming the at least one route result may comprise summing a plurality of segment durations to produce an overall route duration; or averaging a plurality of predicted vehicle speeds, each corresponding to a segment, to produce an overall predicted route speed. Performing the time-dependent journey planning calculation may be based on a time of day and a day of the week during which the vehicle is predicted to be travelling through the segment; and the day of the week may be selected from a group comprising Bank Holiday, Day before Bank Holiday, Day after Bank Holiday, Sunday, Monday, Tuesday, Wednesday, Thursday, Friday, and Saturday.

In another embodiment according to the invention, a method comprises pre-determining at least a portion of a recommended most economic route between an origin point and a destination point; storing the pre-determined portion of the recommended most economic route in a rapid access means in a digital storage means; and accessing the rapid access means for use in responding to a user request for traffic information for a journey between the origin point and the destination point. The pre-determined portion of the recommended most economic route may comprise a route between a first network decision node, for the origin point, and a second network decision node, for the destination point; and the first and second network decision nodes may be nodes, of a network of digital map nodes, that correspond to key transportation links. The rapid access means may comprise a look-up table. Pre-determining at least a portion of the most economic route may comprise determining a shortest time route and/or a shortest distance router between the origin point and the destination point.

In a further related embodiment, the method comprises receiving real time data relating to real time vehicle location from a plurality of vehicle-bound probes; and creating a matrix of vehicle speeds relative to at least a plurality of time of day divisions and a plurality of routes, based on the real time vehicle location data. The plurality of vehicle-bound probes may include at least one mobile telephone. The method may further comprise creating a first matrix of recommended most economic routes relative to at least a plurality of time of day divisions and a plurality of routes, based on the matrix of vehicle speeds. In creating the first matrix of recommended most economic routes, outlier vehicle speeds, and vehicle speeds related to unforecastable events, may be removed from the matrix of vehicle speeds using statistical analysis. The first matrix of recommended most economic routes may comprise a plurality of route matrix elements, each route matrix element corresponding to a pairing of an origin point with a destination point, and comprising: a route string, a shortest distance corresponding to the route string, a time corresponding to the route string, and a cost corresponding to the route string. The route matrix elements may further comprise entries for a plurality of possible vehicle types. Each shortest distance string may be determined by: determining a first distance between the origin point and the first local decision node; determining a second distance between the first local decision node and the first network decision node; determining a third distance between the first network decision node and the second network decision node; determining a fourth distance between the second network decision node and the second local decision node; determining a fifth distance between the second local decision node and the destination node; and summing the first distance, the second distance, the third distance, the fourth distance, and the fifth distance to produce the shortest distance string. Determining the third distance may comprise summing a plurality of distances corresponding to distances between successive members of the set of network decision nodes, wherein the set of network decision nodes comprises further network decision nodes in addition to the first and second network decision nodes.

In a further related embodiment, the method may comprise identifying, in real time, an area of traffic congestion between the origin point and the destination point; and determining an alternative, second matrix of recommended most economic routes based on the identified area of traffic congestion. The area of traffic congestion may be identified using both public domain data and non-public domain data, or a database of traffic patterns; or by determining whether real time vehicle location data from a plurality of vehicle-bound probes correspond to a pre-determined level of variance from historic real time vehicle speeds. The method may further comprise transmitting a message to a user identifying a cause of the area of traffic congestion.

In a further related embodiment, the second recommended most economic route matrix is determined by determining a route having a shortest time between at least one pairing of origin point and destination point. The method may further comprise calculating a forecast delay by comparing the shortest time on the second recommended most economic route matrix with a corresponding time from the first recommended most economic route matrix.

In a further related embodiment, the method comprises transmitting traffic alert information to a user in real time, the transmission comprising at least one of: a traffic messaging channel on a radio data system; a message to a mobile telephone; or a display of data over the Internet.

In another embodiment according to the invention, a method comprises determining, with reference to a first network of geographical boundaries and a second network of digital map nodes, a recommended most economic route between an origin point and a destination point; and transmitting the recommended most economic route to a user. The recommended most economic route may be further determined by determining: a set of local decision nodes comprising a first local decision node, for the origin point, and a second local decision node, for the destination point; and a set of network decision nodes comprising a first network decision node, for the origin point, and a second network decision node, for the destination point; wherein the set of local decision nodes corresponds to links on the second network, and the set of network decision nodes corresponds to key transportation links on the second network; and wherein the origin point and destination point are specified with reference to geographical boundaries on the first network. The geographical boundaries may comprise a set of postcodes. The recommended most economic route may minimise a journey distance, time, or cost between the origin point and the destination point. The set of network decision nodes may comprise further network decision nodes in addition to the first and second network decision nodes. At least one of the origin point, the destination point, and a member of the set of local decision nodes may also be a member of the set of network decision nodes.

According to another aspect of the present invention, there is provided a computer program product comprising program code means adapted to control the methods of any of the preceding embodiments.

According to another aspect of the present invention, there is provided a system for providing traffic information.

In one embodiment according to the invention, a system comprises a route segment processor for performing, for each segment of a route between an origin point and a destination point, a time-dependent journey planning calculation, based on a time during which a vehicle is predicted to be travelling through the segment, to produce a segment result; a route result formation means for forming at least one route result, the at least one route result being formed based on a plurality of the segment results; a rapid access means, in a digital storage means, for storing the at least one route result; and a user request processor for accessing the rapid access means for use in responding to a user request for traffic information for a journey between the origin point and the destination point. The route segment processor may comprise means for determining a segment duration for traversing each segment, based on a predicted vehicle speed for the segment at the time during which the vehicle is predicted to be travelling through the segment; or means for determining a predicted vehicle speed for traversing the segment based on the time during which the vehicle is predicted to be travelling through the segment. The route result formation means may comprise means for summing a plurality of segment durations to produce an overall route duration; or means for averaging a plurality of predicted vehicle speeds, each corresponding to a segment, to produce an overall predicted route speed. The route segment processor may comprise means for performing the time-dependent journey planning calculation based on a time of day and a day of the week during which the vehicle is predicted to be travelling through the segment. The day of the week may be selected from a group comprising Bank Holiday, Day before Bank Holiday, Day after Bank Holiday, Sunday, Monday, Tuesday, Wednesday, Thursday, Friday, and Saturday.

In another embodiment according to the invention, a system comprises a route pre-determination processor for pre-determining at least a portion of a recommended most economic route between an origin point and a destination point; a rapid access means in a digital storage means, for storing the pre-determined portion of the recommended most economic route; and a user request processor for accessing the rapid access means for use in responding to a user request for traffic information for a journey between the origin point and the destination point. The pre-determined portion of the recommended most economic route may comprise a route between a first network decision node, for the origin point, and a second network decision node, for the destination point; and the first and second network decision nodes may be nodes, of a network of digital map nodes, that correspond to key transportation links. The rapid access means may comprise a look-up table. The route pre-determination processor may comprise means for determining a shortest time route or a shortest distance route between the origin point and the destination point.

In a further related embodiment, the system comprises a real time data receiver for receiving real time data relating to real time vehicle location from a plurality of vehicle-bound probes; and a matrix, in a digital storage means, relating vehicle speeds to at least a plurality of time of day divisions and a plurality of routes, based on the real time vehicle location data. The plurality of vehicle-bound probes may include at least one mobile telephone. The system may further comprise a first matrix of recommended most economic routes, in a digital storage medium, relating a plurality of recommended most economic routes to at least a plurality of time of day divisions, based on the matrix of vehicle speeds. The first matrix of recommended most economic routes may be based on the matrix of vehicle speeds with outlier vehicle speeds, and vehicle speeds related to unforecastable events, removed using statistical analysis. The first matrix of recommended most economic routes may comprise a plurality of route matrix elements, each route matrix element corresponding to a pairing of an origin point with a destination point, and comprising: a route string, a shortest distance corresponding to the route string, a time corresponding to the route string, and a cost corresponding to the route string.

The route matrix elements may further comprise entries for a plurality of possible vehicle types. The system may further comprise means for determining each shortest distance string by: determining a first distance between the origin point and the first local decision node; determining a second distance between the first local decision node and the first network decision node; determining a third distance between the first network decision node and the second network decision node; determining a fourth distance between the second network decision node and the second local decision node; determining a fifth distance between the second local decision node and the destination point; and summing the first distance, the second distance, the third distance, the fourth distance, and the fifth distance to produce the shortest distance string. The system may further comprise means for determining the third distance by summing a plurality of distances corresponding to distances between successive members of the set of network decision nodes, wherein the set of network decision nodes comprises further network decision nodes in addition to the first and second network decision nodes.

In a further, related embodiment, a system comprises a congestion scheduler for identifying, in real time, an area of traffic congestion between the origin point and the destination point; and a matrix processor for determining an alternative, second matrix of recommend most economic routes based on the identified area of traffic congestion. The congestion scheduler may comprise means for identifying the area of traffic congestion using both public domain data and non-public domain data, or a database of traffic patterns; or may comprise means for identifying the area of traffic congestion by determining whether real time vehicle location data from a plurality of vehicle-bound probes correspond to a pre-determined level of variance from historic real time vehicle speeds. The system may further comprise a transmitter for transmitting a message to a user identifying a cause of the area of traffic congestion.

In a further related embodiment, the matrix processor comprises means for determining the second recommended most economic route matrix by determining a route having a shortest time between at least one pairing of origin point and destination point. The system may further comprise a forecast delay processor for calculating a forecast delay by comparing the shortest time on the second recommended most economic route matrix with a corresponding time from the first recommended most economic route matrix.

In a further related embodiment, the system comprises a traffic alert generator for transmitting traffic alert information to a user in real time, the transmission comprising at least one of: a traffic messaging channel on a radio data system; a message to a mobile telephone; or a display of data over the Internet.

In another embodiment according to the invention, a system comprises a route determination processor for determining, with reference to a first network of geographical boundaries and a second network of digital map nodes, a recommended most economic route between an origin point and a destination point; and a transmitter for transmitting the recommended most economic route to a user. The route determination processor may comprise means for determining the recommended most economic route by determining: a set of local decision nodes comprising a first local decision node, for the origin point, and a second local decision nodes, for the destination point; and a set of network decision nodes comprising a first network decision node, for the origin point, and a second network decision node, for the destination point; wherein the set of local decision nodes corresponds to links on the second network, and the set of network decision nodes corresponds to key transportation links on the second network; and wherein the origin point and destination point are specified with reference to geographical boundaries on the first network. The geographical boundaries may comprise a set of postcodes. The recommended most economic route may minimise a journey distance, time, or cost between the origin point and the destination point. The set of network decision nodes may comprise further network decision nodes in addition to the first and second network decision nodes. At least one of the origin point, the destination point, and a member of the set of local decision nodes may also be a member of the set of network decision nodes.

In another embodiment according to the invention, a method for providing traffic information for a journey comprises performing time-dependent journey planning based on a plurality of successive route sections each having an associated vehicle speed, wherein the vehicle speed depends on the time of day at which it is predicted the route section will be traversed on the journey. In a further related embodiment, a computer program product comprises program code means adapted to control the method of the preceding embodiment. In another further related embodiment, a system for providing traffic information for a journey comprises a route planning processor for performing time-dependent journey planning based on a plurality of successive route sections each having an associated vehicle speed, wherein the vehicle speed depends on the time of day at which it is predicted the route section will be traversed on the journey.

Additional objects, advantages, and novel features of the invention will be set forth in part in the description that follows, and in part will become apparent to those skilled in the art upon examination of the following and the accompanying drawings, or may be learned by practice of the invention.

### BRIEF DESCRIPTION OF THE DRAWINGS

For a better understanding of the present invention, and to show how the same may be carried into effect, reference will now be made, by way of example only, to the accompanying drawings, in which:
Fig. 1 illustrates the components of the Road Timetable ^{™}, according to an embodiment of the invention;
Fig. 2 describes the initial data collection, according to an embodiment of the invention;
Fig. 3 describes the database support structure, according to an embodiment of the invention;
Fig. 4 provides the definitions for the calculation routine, according to an embodiment of the invention;
Fig. 5 provides the scope of the key elements in the calculation routine, according to an embodiment of the invention;
Fig. 6 identifies the characteristics of distance and speed in the calculation routine, according to an embodiment of the invention;
Fig. 7A outlines the shortest path algorithm, according to an embodiment of the invention;
Fig. 7B shows calculation of a journey time using time buckets, according to an embodiment of the invention;
Fig. 7C shows information stored in a matrix as a result of journey calculations, in accordance with an embodiment of the invention;
Fig. 7D shows merger of multiple nodes into a single network decision node, according to an embodiment of the invention;
Fig. 8 outlines the Benchmark (distance based) Road Timetable ^{™} process, according to an embodiment of the invention;
Fig. 9 describes the Benchmark (distance based) Road Timetable ^{™} database structure, according to an embodiment of the invention;
Fig. 10 describes the variations of the Road Timetable ^{™} by scope, according to an embodiment of the invention;
Fig. 11 describes the Congestion Scheduler ^{™}, according to an embodiment of the invention;
Fig. 12 describes the Alternative (time based) Road Timetable ^{™} process, according to an embodiment of the invention;
Fig. 13 describes the Alternative (time based) Road Timetable ^{™} database structure, according to an embodiment of the invention;
Fig. 14 describes the Traffic Alert Generator ^{™} data flow, according to an embodiment of the invention; and
Fig. 15 describes the On-line (www) Road Timetable ^{™} process, according to an embodiment of the invention.

### DETAILED DESCRIPTION

This invention relates to the provision of forecast travel speeds for different types of road vehicle; including forecasts for specific road lengths at particular times of day, and for specific journeys throughout the day. However, it may also be applied to shipping operations, aircraft, and rail journeys; and to multi-modal journeys that combine movement in two or more modes of transport.

In accordance with one embodiment of the invention, there is provided a means for determining customized data, for more than one vehicle type. Such customized data may be used, firstly, for forecasting journey times accurately before a journey, in order to select the quickest rather than the shortest route; and secondly, in the event of traffic congestion, for offering journey information and re-routing in real-time during the journey.

More broadly, an embodiment according to the invention determines a most economic route between an origin point and a destination point. The most economic route may be defined by the user and may include, but is not limited to: the shortest route in distance; the quickest route in time; the lowest cost route; or any combination of these.

The preferred embodiment of the present invention uses traffic data collected from a number of sources, but particularly from probes in individual road vehicles. These vehicle-bound probes obtain the speed of different types of vehicles over specific road lengths at particular short time intervals throughout the day on each day of the week. Data is collected from the probes to generate a database of actual vehicle speeds over a period of time. The vehicle-bound probes may include mobile phones of the vehicles' drivers, the location of which may be sensed in a manner known to those of skill in the art; or may be other types of vehicle probes.

In accordance with an embodiment of the invention, the vehicle probe data is used in two forms.

Firstly, the vehicle probe data is used as historic data from which to forecast the speed of a defined vehicle type, either on a particular road length at a particular time, or upon a particular journey (origin to destination) at any time of day. This data is valuable information to the individual traveler, the commercial vehicle route planner, and the traffic authorities, because it offers a substantial degree of accuracy above any other current means. The forecast road speed data allows the calculation of the fastest route for a particular journey starting at different times of day, where the fastest route may not necessarily be the shortest distance due to forecast traffic congestion in one or more road lengths making up the shortest route.

Secondly, the vehicle probe data is used as live (real time) data identifying the speed of current vehicle movements on a particular road length. This traffic information is particularly valuable to current (or potential) travelers who are either in an area of traffic congestion or approaching an area of traffic congestion. In both instances travelers will be able, by a number of alternative communication means, to obtain the reason for the traffic congestion and the current speed of vehicle types in the congested area; and to either determine a new estimated time of arrival using their current route, or to forecast whether an alternative route will enable them to arrive at their destination at an earlier time.

An embodiment according to the present invention provides a system for producing traffic information by means of:
- collecting accurate historic traffic movement data for specific vehicle types on particular route lengths at specific time periods throughout each day of the week;
- determining potential areas of traffic congestion together with reasons and the forecast of traffic speed;
- providing a database of forecast traffic speeds over particular route lengths at specific times of each day of the week;
- providing a means of up-dating the database of traffic speeds both by new data and a forecast traffic pattern in the event of known activities (for example, new road works on a particular route length);
- providing journey plans (routes) with forecast travel times for travelling at different times of the day (and on different days of the week) identifying either the route with the shortest distance or the route with the shortest travel time;
- integrating real time data to estimate a delay time at a particular traffic congestion event;
- integrating real time data to estimate time of arrival before or during a particular journey; and
- integrating real time data to determine the quickest route before or during a particular journey.

An objective of an embodiment of the present invention is to provide realistic journey times from any start point to any destination point, for different types of vehicles at different time intervals in the day, by means of selecting both the route with the shortest distance and the route with the shortest travel time. These routes may be different due to forecast travel times over particular road lengths that make up the route. These realistic journey times will take account of predictable traffic congestion due to such factors as road works or volume of traffic on a particular road length.

An embodiment according to the present invention is known as the Road Timetable ^{™}.

A first aspect of the Road Timetable^{™} embodiment is the definition of a calculation framework upon which to undertake the distance and time calculation from the Origin Point (OP) to the Destination Point (DP). This calculation framework uses a combination of standard geographical boundaries (such as post codes) and nodal points which are standard to current digital mapping processes. The calculation framework defines the structure of both the database and the algorithm which make up the Road Timetable ^{™}.

A second aspect of the Road Timetable^{™} embodiment is that initial vehicle speed data is collected from FVD ^{™} probes which initially provide data sets on latitude and longitude at a reported time. From two or more such data sets, including the location and direction, it is possible to calculate the speed of a vehicle. Such historic data is accurate and may be stored in a database where the practical lowest level of detail is the speed of a particular type of vehicle on a specific road length at a particular time of a particular day and day of the week. Sufficient historic data at the lowest level of detail may be aggregated and after validation used to forecast trends and create predictions of future vehicle speeds. This is achieved by means of standard statistical averaging and forecasting techniques (such as exponential smoothing, which in a time services analysis gives greater weight to the most recent data collected).

A third aspect of the Road Timetable^{™} embodiment is that the FVD^{™} will be validated and cleansed before being added to the database. The validation process ensures that input to the database records are reasonable and are the time data created only when sufficient raw data is available to statistically validate the sample size. The cleansing process take out the "outliers"(errors in reading data) and those data sets which relate to unforeseen and unforecastable events (for example, traffic accidents or security incidents). The data sets used are therefore particularly accurate reflections of forecastable events.

A fourth aspect of the Road Timetable^{™} embodiment is the algorithm that calculates both the distance and time from OP to DP for each time period, and creates a matrix comprising distance, time, and route strings for both the shortest route and the quickest route in each time period. The creation of the distance and time matrix is an important feature of the Road Timetable ^{™}, and is necessary because customers require "immediate" answers, and generally cannot wait for extensive computing time for calculation routines to be undertaken. It is the immediate answer (under 30 seconds on the computer screen from execution), together with the accuracy of the answer, which is an important feature of the Road Timetable ^{™} as compared with other journey planning products.

In the preferred embodiment, the present invention has three separate types of output. Firstly, output for "journey planning" either by individuals or traffic planners where such output could be provided by electronic form by means of a CD ROM, e-mail or the web access and up-dated on a regular basis. Such output would be used by individuals for determining the best journey route and time or by commercial traffic planners as an input to vehicle routing and scheduling systems. Secondly, output for "real-time" on route (or before journey) route changes could be provided by means of web access, allowing customers to avoid, where possible, current and potential traffic congestion including known unpredictable incidents such as traffic accidents at the time of their journey.

The third type of output, in accordance with an embodiment of the invention, is a forecast of traffic patterns based upon simulation of new (or hypothetical) data. Examples of such an output are the impact of opening a new road on the travel speeds from one or more location to others; or the impact of additional traffic due to a specific event (for example a sporting fixture) on the travel speeds on various roads. Simulation output is used for traffic planning purposes, such as planning where to locate emergency service vehicles in order to achieve the required response time throughout the territory during a major sporting fixture, which attracts substantial additional traffic volumes and congestion on the local road network.

An embodiment according to the present invention is particularly accurate in its forecast of travel speeds on particular road lengths, and relies heavily upon the constant and regular inflow of initial data from vehicle probes in order to regularly up-date the matrix in the Road Timetable ^{™}. It is this regular up-dating process that ensures and maintains the accuracy of the predicted journey planning distances and times for the Road Timetable ^{™}.

A preferred embodiment of the present invention will now be described, by way of example only using the accompanying drawings. Embodiments of this invention may be used for the provision of forecast travel speeds for all modes of transport including, but not limited to, short sea ferries, rail, air and any combination of such modes of transport.

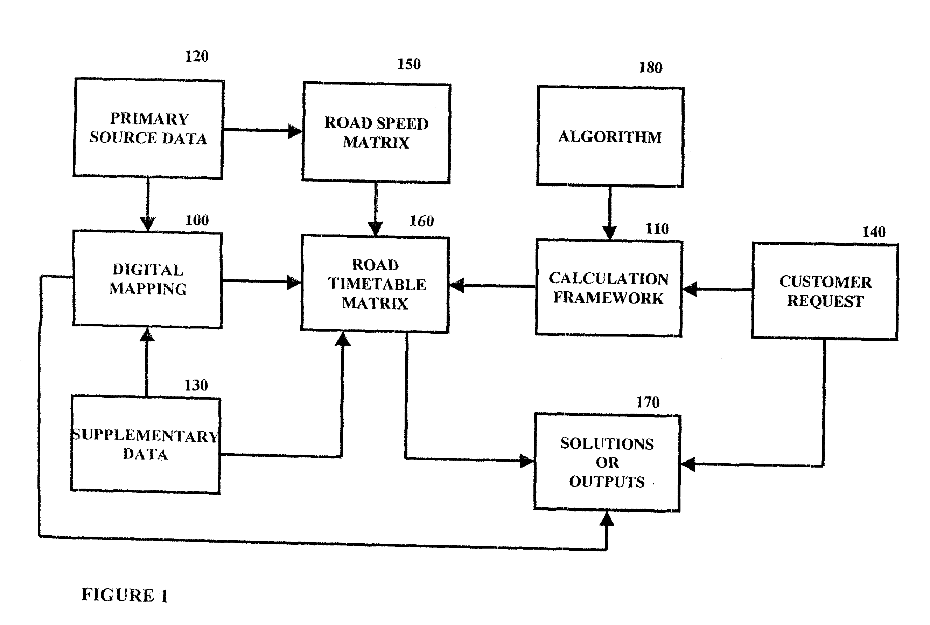

The components of the Road Timetable ^{™}, which is the preferred embodiment, are outlined in Fig. 1, and include a digital map module 100, a calculation framework 110, source data 120, supplementary data 130, a road speed matrix module 150, and an algorithm-implementing module 180 to calculate the solutions or output 170 in response to the customer request 140.

The Road Speed Matrix module 150 in the embodiment of Fig. 1 provides a record of the aggregate speed of each type of vehicle over each road length for each defined time bucket, where a road length is defined by the distance between two nodal points defined on a digital map. The Road Speed Matrix module 150 will provide validated speeds (that is, after the data has been cleaned) and separate road speeds for each direction of travel for each vehicle type. Vehicle speeds are recorded with specific times of day and the speeds are divided into separate time buckets throughout the day where each time bucket may be a five or fifteen minute interval or whatever time interval is appropriate.

The Road Timetable ^{™} module 160 in the embodiment of Fig. 1 provides a matrix comprising the route with the shortest distance between two points and the route with the lowest time - two points starting at particular times of the day on a particular day of the week using forecast vehicle speeds from the road speed matrix module 150 for each type of vehicle. The Road Timetable ^{™} module 160 uses a digital image of a street level map provided by digital map module 100 (which are commercially available for many counties). Digital map module 100 identifies each type of road (motorways, arterial roads, other A roads, B roads and others) and provides nodal points at variable distances along each road. Typically a nodal point is a position (defined by latitude and longitude) of a road junction, bridge or other specific road feature. For each route length the digital map could be expected to include additional data such as type of road, distance and significant features such as low bridges (with height defined in meters).

The primary source data 120 of the embodiment of Fig. 1 is date, time, latitude and longitude collected from moving vehicles by means of a probe, the sum of the information being known as floating vehicle data (FVD^{™}). From this primary source data 120 it is possible to calculate the speed of a particular type of vehicle travelling between two or more nodes on a particular road type. Thus, by aggregating this data, specific vehicle type travel speeds may be obtained in selected time buckets for particular road lengths - as provided by the road speed matrix module 150.

The supplementary data 130 of the embodiment of Fig. 1 is, for example, information on road works over particular road lengths, which are in the public domain and available from a number of sources. This supplementary data 130 identifies reasons for changes from one day to another in specific vehicle type travel speeds over selected road lengths in similar time buckets. The supplementary data 130 also assists with the validation of the primary source data.

The Road Timetable ^{™} module 160 of the embodiment of Fig. 1 uses data derived from a calculation framework 110 and an adapted shortest path algorithm module 180 to derive a matrix of the shortest distances and associated time between the OP (Origin Point) and DP (Destination Point) or lowest times between the OP and DP. However, a customer request 140 for the shortest forecast time and associated distance from an OP to a DP may not be included in the matrix provided by the Road Timetable ^{™} 160 module. In such a case, further calculations may be required using the calculation matrix 110 to provide an accurate solution.

Solutions or outputs 170 of the embodiment of Fig. 1 include a list of alternative routes between the OP and DP at a defined start time, identifying forecast journey time, distance, route (in terms of a journey plan) and a forecast of alternative journey times if starting at alternative times (for example, start 30 minutes later).

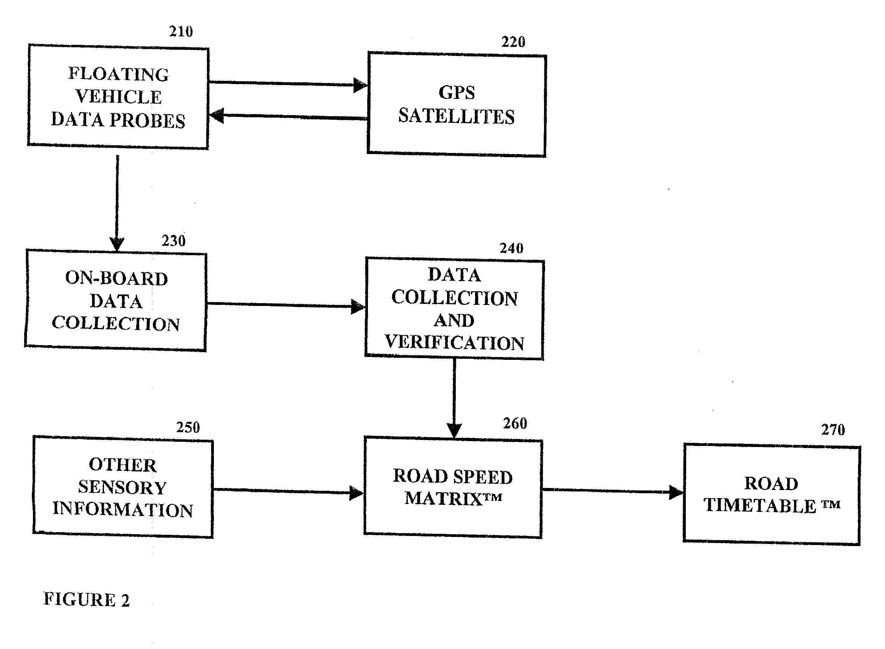

In accordance with an embodiment of the invention, the ability to forecast traffic speeds is based upon the collection, interpretation, analysis and presentation of historic traffic speeds collected by means of "floating vehicle data" (FVD ^{™}). The embodiment of Fig. 2 describes how positional and speed data is both collected and verified for the Road Timetable ^{™} module 270. Floating vehicle data probes 210 are fitted to either a vehicle or a trailer (or any other transport mode) and these probes 210 collect data on both time and position (defined as latitude and longitude) the latter by means of the GPS (Global Positioning System) satellite system 220. Such data is store on board in a memory unit 230 and downloaded to a computer memory by either GSM or radio data download means 240. From such data is it possible to calculate both the direction of travel and speed of travel of an individual vehicle type over a particular section of road between two or more nodal points. The FVD^{™} data collected is verified by means of correlation with other historic data and other sensory information 250 in the public domain such as road speeds and traffic volumes from overhead sensors on the bridges, cameras on the road side or traffic spotters. Verified data is presented using the road speed matrix module 260.

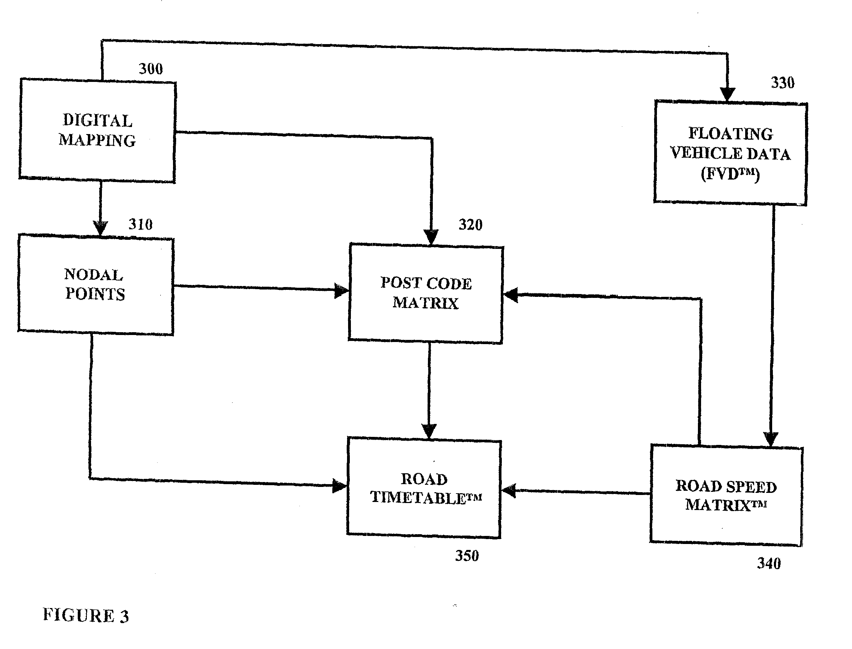

The embodiment of Fig. 3 shows the inter-relationship of the key database requirements before undertaking a distance and time calculation from an origin to a destination. Initially a digital map module 300 is required, which provides a representation of nodal points (road junctions or key positions on the road), potentially down to street level detail. From this, specific nodal points may be selected, and the links from each nodal point to others both identified and described 310. Such descriptions of each link (or road length) include, but are not limited to: links to other nodal points; type of road; distance; direction of travel; restrictions (for example, bridge heights, or weight restrictions); speed limits; and special features (for example, road tolls).

In the embodiment of Fig. 3, there is also a requirement for a post code matrix module 320, which gives the background for estimated road distance, for roads not defined by the nodal points. Such estimates are calculated by means of the straight line distance multiplied by a "wiggle factor," where the "wiggle factor" is taken from a random sample of FVD^{™} containing distance calculations from actual data of vehicles travelling in the post code sector on roads that are not included in the nodal network. The post code matrix should include, in the UK for example, the following information: post code (at sector level, for example BL1 5); list of adjacent post codes; all nodal points in the post code; "wiggle factor" in the post code (ratio of the average distance of each route length divided by the as-the-crow-flies displacement between the two endpoints - for example, 1.24); and the speed for each type of vehicle in the post code for each time bucket and day of the week

The FVD^{™} 330 of the embodiment of Fig. 3 defines the average speed of each vehicle type between nodal points in each time bucket collected from the individual vehicles. The time buckets selected represent a practical means to sum of data collected into relevant groupings to simplify the calculation and minimize the computing time. The data is verified and presented using the road speed matrix module 340.

### Calculating the Road Timetable ^{™} Data

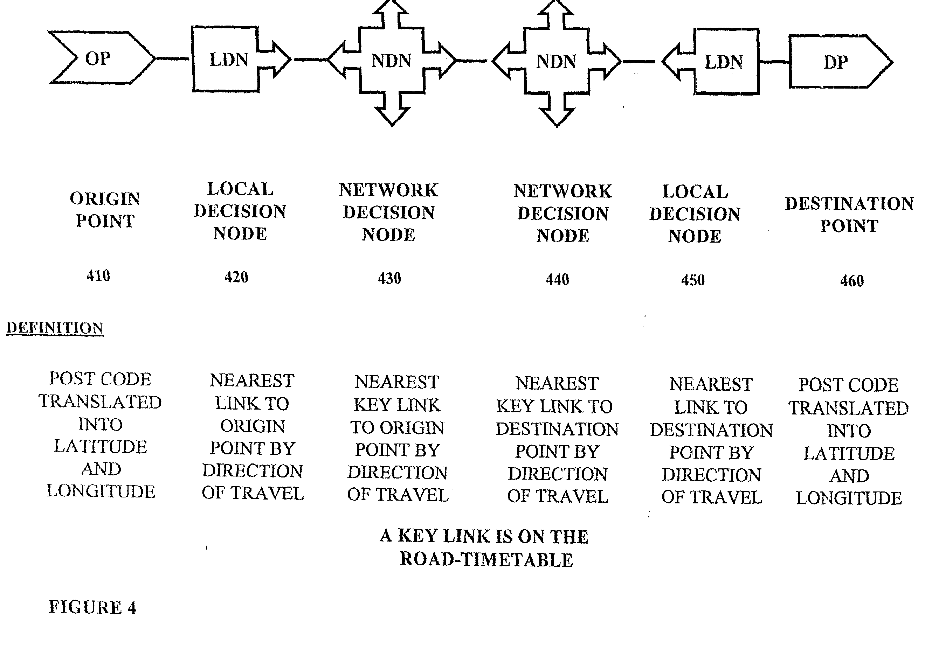

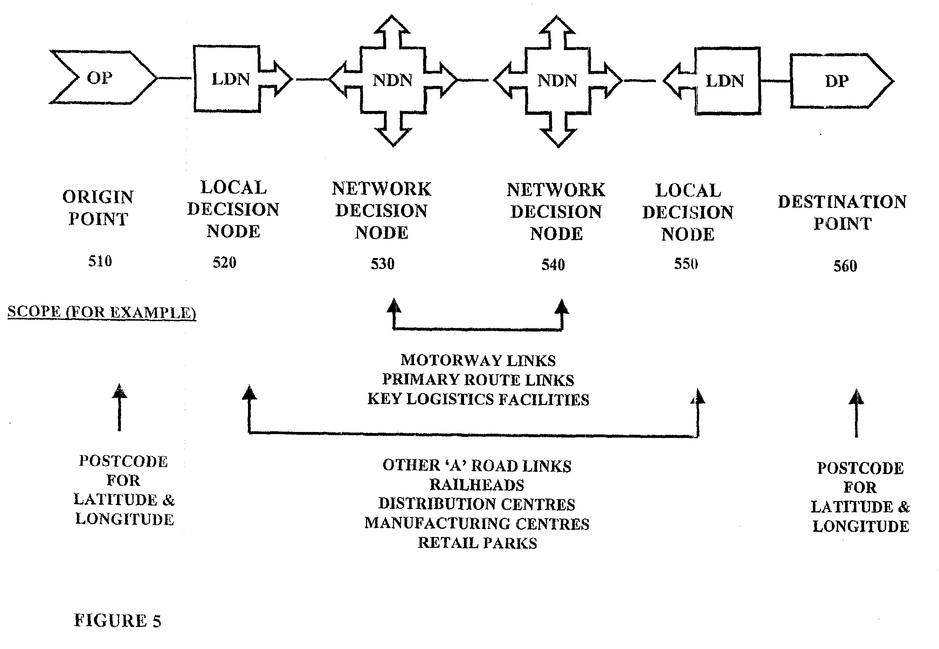

In the preferred embodiment of this invention, the problem of determining both the distance and the alternative timings from one point to another is structured in the manner described in the embodiments of Figs. 4 and 5. In Figs. 4 and 5, the "ORIGIN POINT" (OP) 410 and 510 is described as a postcode (alternatively zip code or other similar means), which is converted into a latitude and longitude by means of currently available mapping software. The "LOCAL DECISION NODE" (LDN) 420, 450,520 and 550 of Figs. 4 and 5 is the nearest recognised nodal point to the OP or DP in the direction of travel. Typically a LDN will be selected from A road junctions, railheads, distribution centers, manufacturing centers or retail parks. In some instances users may wish to set up their own LDN structure (for example, a retailer may define its warehouses and each of its retail stores as LDNs). The "NETWORK DECISION NODE" (NDN) 430, 440, 530 and 540 of Figs. 4 and 5 is the nearest key road link (motorway link, primary route link or specially selected link) to the OP or DP by direction of travel. The "DESTINATION POINT" (DP) 460 and 560 of Figs. 4 and 5 is described as a postcode (alternatively zip code or other similar means), which is converted into latitude and longitude by means of currently available mapping software.

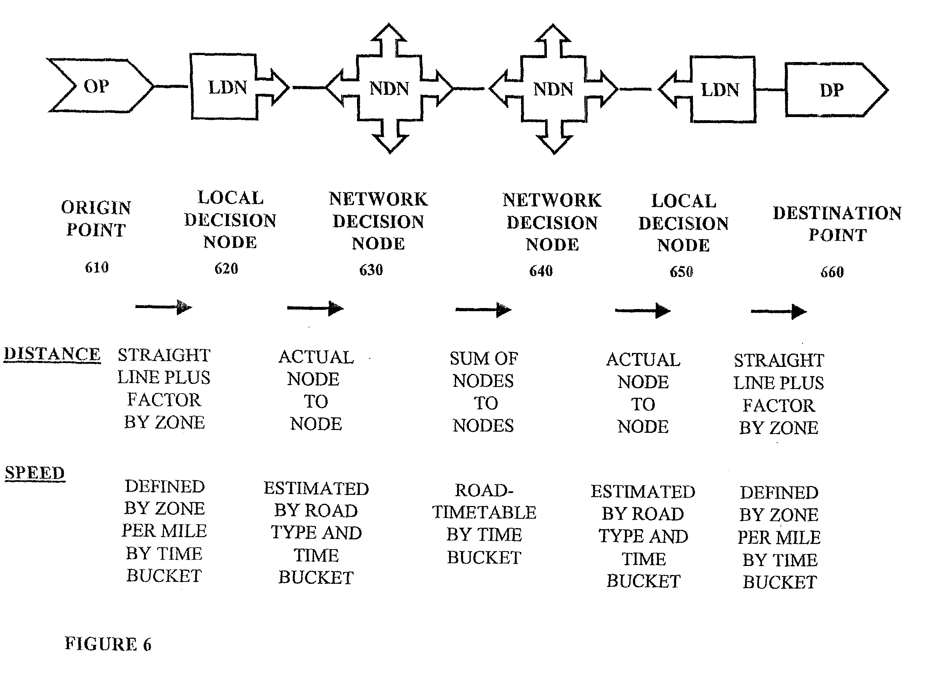

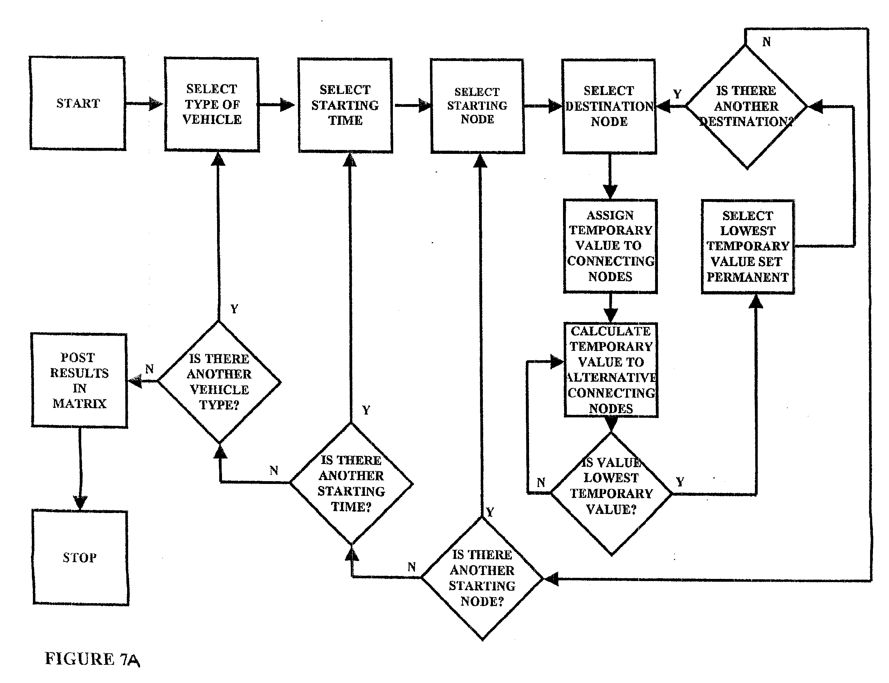

Based upon the structure of the embodiments of Figs. 4 and 5, the shortest distance and time between the OP and DP is calculated as shown in the embodiment of Fig. 6. First, both "OP" 610 and "DP" 660 are recognized as postcodes (or equivalent) and translated into latitudes and longitudes (by means of software). A validation process is conducted to check the postcodes given. Next, the direction of travel from the OP 610 to the DP 660 is calculated in degrees (where North equals both 0° and 360°). The LDN database is then searched to determine all LDNs in the OP 610 postcode and adjacent postcodes, and the nearest LDN 620 to the OP 610 in the direction of travel (based upon straight line distance) is selected. Next, the "forecast distance" from the OP 610 to the selected LDN 620 is calculated by multiplying the straight line distance by a "wiggle factor," shown on a postcode database and calculated as the average from a sample of actual data collected for each postcode. Next, the "forecast time" from the OP 610 to the selected LDN 620 is calculated by determining a speed per mile for each "forecast mile," where the speed is defined in the postcode database for each time bucket by day of the week for each postcode, and is calculated from a sample of actual data collected for each postcode. Next, the first NDN 630 is selected from the NDN database, from amongst those NDNs that are linked to the LDN 620 by the direction of travel. Next, the actual distance from LDN 620 to the NDN 630 is determined using the database and the mapping software. Next, the forecast time from the LDN 620 to the NDN 630 is calculated for the road type (by means of the mapping software), vehicle type and time bucket, by day of the week, from an estimated start time. Next, the LDN 650 and NDN 640 for the DP 660 is determined, and the forecast distance and forecast time are calculated by the same means as described above for the OP distance and time calculations. Next, the distance between the nearest NDN to the OP 630 and the nearest NDN to the DP 640 is calculated by means of the "shortest path algorithm" - an example of which is shown in Fig. 7A. Next, the forecast time for the shortest path between the nearest NDN to the OP 630 and the nearest NDN to the DP 640 is calculated, based on the vehicle type and the sum of actual speeds (determined from FVD^{™} data), for each road length, in each relevant time bucket, by day of the week. Next, the forecast distances and forecast times from the OP 610 to the DP 660 are summed to provide the solution 170.

An important feature of an embodiment according to the present invention is that the calculation routine uses the time buckets in such a manner that as the route is built up, the time buckets selected represent the time bucket in which the vehicle is traveling. Thus, from a defined start time, it is possible to accurately reflect the journey time based upon the data sets in the road speed matrix 150 for each time bucket.

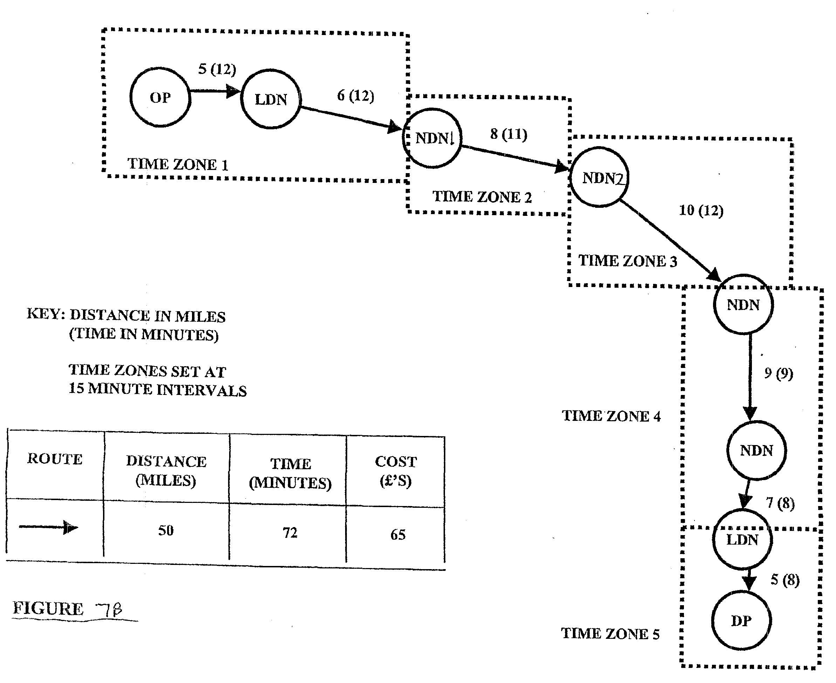

Fig. 7B shows calculation of a journey time using time buckets in such a manner, in accordance with an embodiment of the invention. As shown in Fig. 7B, as the route between the OP and the DP is calculated, a different time zone is used (Time Zone 1 through Time Zone 5) for performing the relevant time-dependent calculations for each time division that will occur during the route. Thus, for example, the time of day corresponding to Time Zone 1 is used for calculating how long it will take for the journey between the OP and the first LDN; then the time of day corresponding to Time Zone 2 is used for calculating how long it will take for the journey between NDN1 and NDN2; then Time Zone 3, Time Zone 4, and Time Zone 5, in a similar fashion. In each case, floating vehicle data for a given route segment is looked up using the time of day corresponding to the Time Zone that the vehicle will be in when it has reached that point in the journey. Thus, calculations of journey times will be correctly built up based on changing traffic congestion patterns on the route segments as the journey progresses.

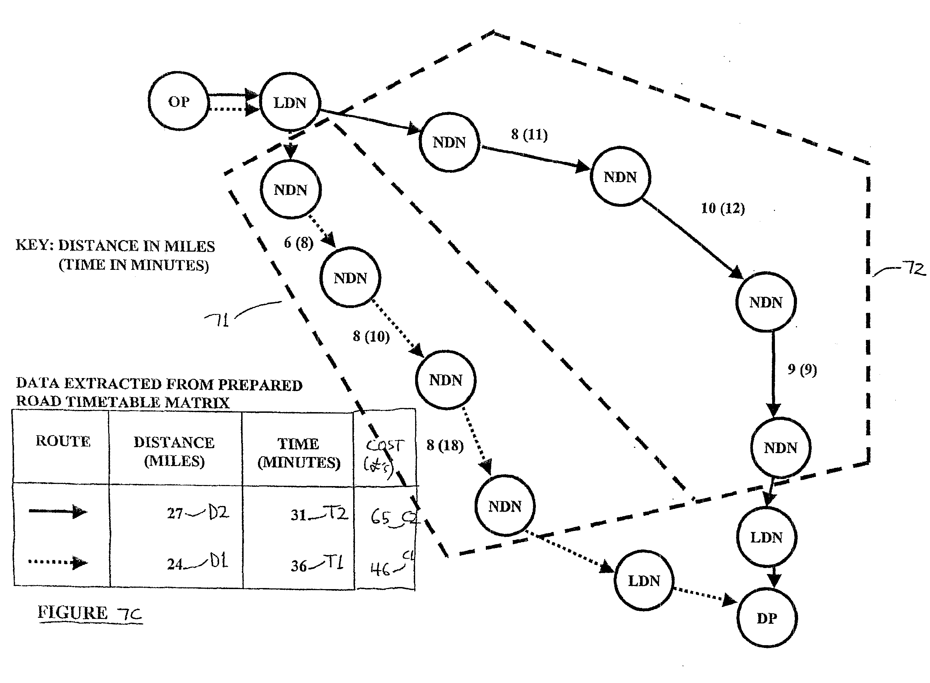

Fig. 7C shows how both a shortest distance route 71 and a shortest time route 72 may be built up by such calculations, in accordance with an embodiment of the invention. As shown in Fig. 7C, after the calculations are performed, the following information may be stored in a rapid access matrix, for later consultation in performing journey computations: the shortest distance route string 71 and its corresponding distance D1, time T1, and cost C1; and the shortest time route string 72 and its corresponding distance D2, time T2, and cost C2.

In addition, the lowest cost route may be calculated in a similar fashion. Regardless of the type of route calculated, the calculated costs may include the fixed cost associated with the vehicle (e.g. road fund license); the variable costs associated with the vehicle (e.g. fuel costs); the drivers costs; and any costs associated with the route taken (e.g. road tolls, bridge tolls, or congestion charges).

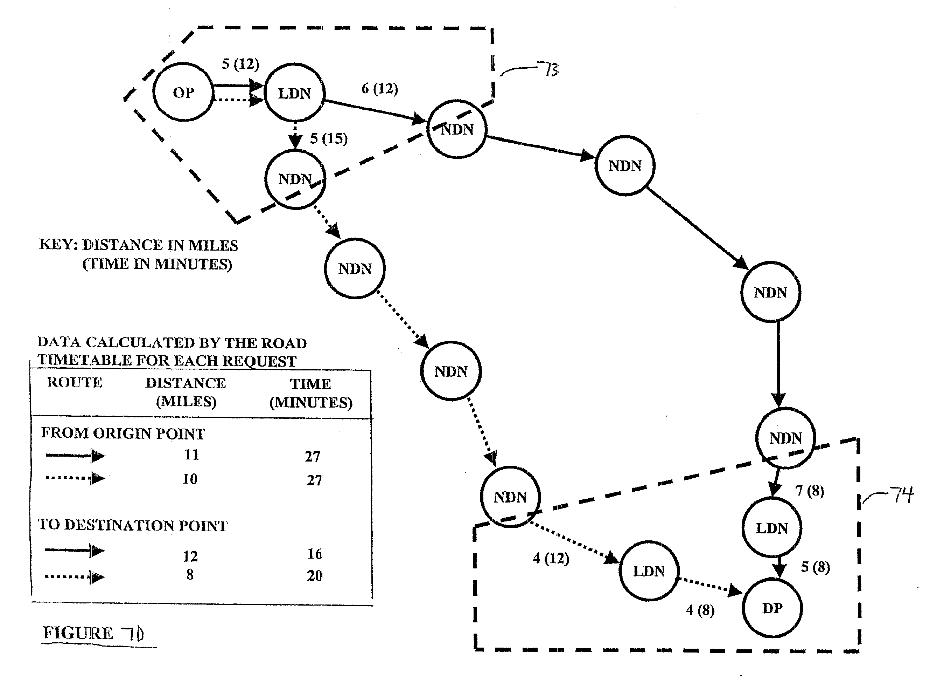

As shown in the embodiment of Fig. 7D, it should also be noted that links on the calculated route need not be designated exclusively as an origin or destination point, a local decision node, or a network decision node; nor must all such categories of links be used in calculating a route. Instead, for example, an OP or DP, an LDN, or more than one of such points, may be merged into a single node 73 or 74 for calculating a given route. This merged node may be designated, for example, to be a single network decision node 73 or 74. Alternatively, routes may be calculated directly between a pair of NDN's, without using an OP/DP or LDN; or may be calculated between two LDN's; or between other node types, as will be apparent to those of ordinary skill in the art.

From similar calculation routines it is possible, in accordance with an embodiment of the invention, to select either the route with the shortest distance or the lowest time from the OP 610 to the DP 660. In some instances the route with the shortest distance will also be the route with the shortest time, but if timings differ for alternative sections of road length, where all the timings are below the maximum legally permitted travel speed, then the route with the forecast fastest journey time may not be the route with the shortest distance.

### Data Accuracy:

It is recognised that for commercial applications of the Road Timetable ^{™}, in accordance with an embodiment of the invention, a key element is the accuracy of the data provided, particularly the forecast time for the route. An essential element of an embodiment according to the invention is therefore the manner in which accurate forecast travel times are obtained and maintained for each route. In order to ensure accuracy, three elements of the Road Timetable ^{™} module are linked together, in an embodiment according to the invention, to achieve different customer goals. The three elements are, first, the Benchmark Road Timetable ^{™} module, for a shortest distance based solution with an associated travel time; second, the Road Timetable ^{™} module with Congestion Scheduler ^{™} for alternative time based solutions considering traffic data in the public domain; and third, the Road Timetable ^{™} module with "Traffic Alert Generator"^{™} for "real time" live time based solutions that consider traffic data available in real time from local sources.

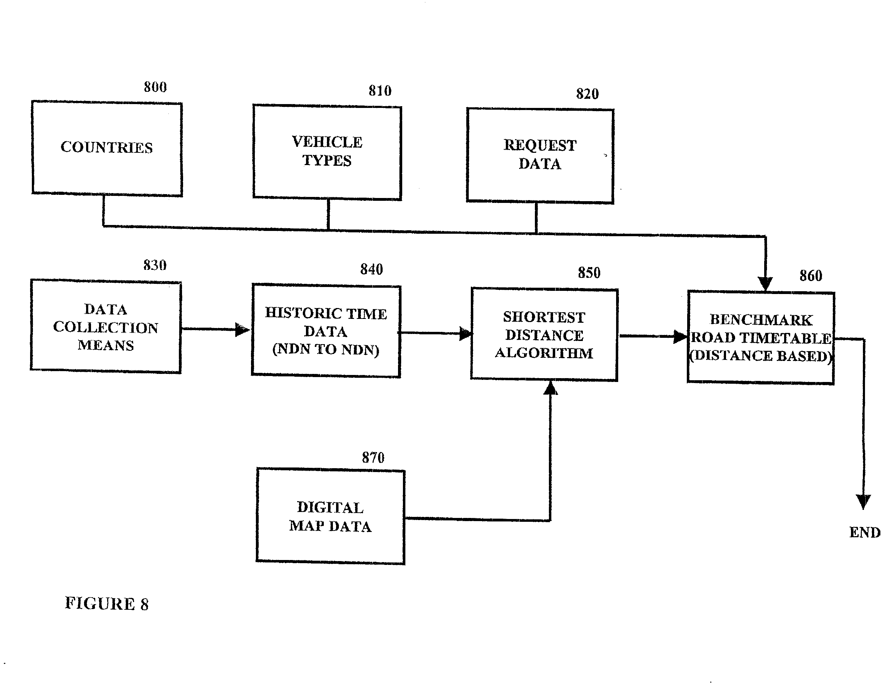

The Benchmark Road Timetable ^{™} module is presented in the embodiment of Fig. 8. This version of the Road Timetable ^{™} module recognizes that the majority of both the distance and time on each route will be from the NDN nearest the OP 630 to the NDN nearest the DP 640. The Benchmark Road Timetable ^{™} module therefore uses FVD ^{™} data 830 and sorts this into selected time buckets for each route length of an NDN to the adjacent NDNs 840. Then, by the combination of the digital map data 870 and the shortest distance algorithm 850, it is possible to calculate a Road Timetable ^{™} matrix containing the shortest distance and a given speed between all NDNs in the road network.

In accordance with an embodiment of the invention, based upon data for separate counties 800 and separate vehicle types 810, the customer request data 820 (for a distance and time from an OP 610 to a DP 660) can be calculated quickly using a look-up table provided by the Benchmark Road Timetable ^{™} module. The matrix containing route data from one NDN to all other NDNs requires considerable computer-based computation time, and the calculation of OP to DP may be undertaken quickly if these calculations are undertaken and stored in a look-up table. Instead of a look-up table, any other rapid access means may be used, i.e. any memory means capable of storing the results of the matrix calculation. Precalculating these results and storing them in a rapid access means may considerably reduce computation time.

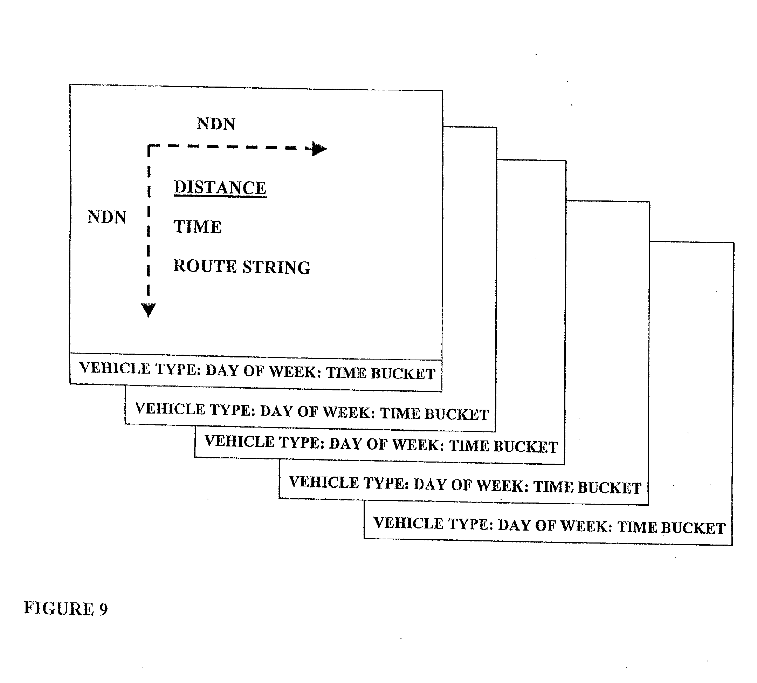

To ensure accuracy, the Benchmark Road Timetable ^{™} module can provide a database structure, as shown in the embodiment of Fig. 9, giving the distance (miles or kilometers), travel time (minutes) and the route description (by road number and direction) from one NDN to all other NDNs on the network. This database can also be presented by vehicle type, day of the week, and time bucket. "Vehicle Types" can include, but are not limited to, such definitions as cars, light vans, medium vans, light commercials, heavy goods vehicles, and coaches. "Days of the week" can include, but are not limited to, such definitions as Sunday, Monday, Tuesday, Wednesday, Thursday, Friday, Saturday, Bank Holiday, Day before Bank Holiday, and Day after Bank Holiday. "Time buckets" can include, but are not limited to, any combination of a 5 minute interval throughout the day - such that, for example, an equal volume of 15 minute intervals throughout the day gives 96 time buckets per day.

In accordance with an embodiment of the invention, the accuracy of the database provided by the Benchmark Road Timetable^{™} module is maintained by re-processing the look-up table. Such re-processing may be performed, firstly, when the road network or digital map data 870 is updated (because the Benchmark Road Timetable ^{™} module seeks to present a distance based solution, and therefore relies on accurate digital map distances). The look-up table may also be re-processed when more FVD is available that changes the data in any individual time bucket by more than 5% (in order to update specific speed calculations).

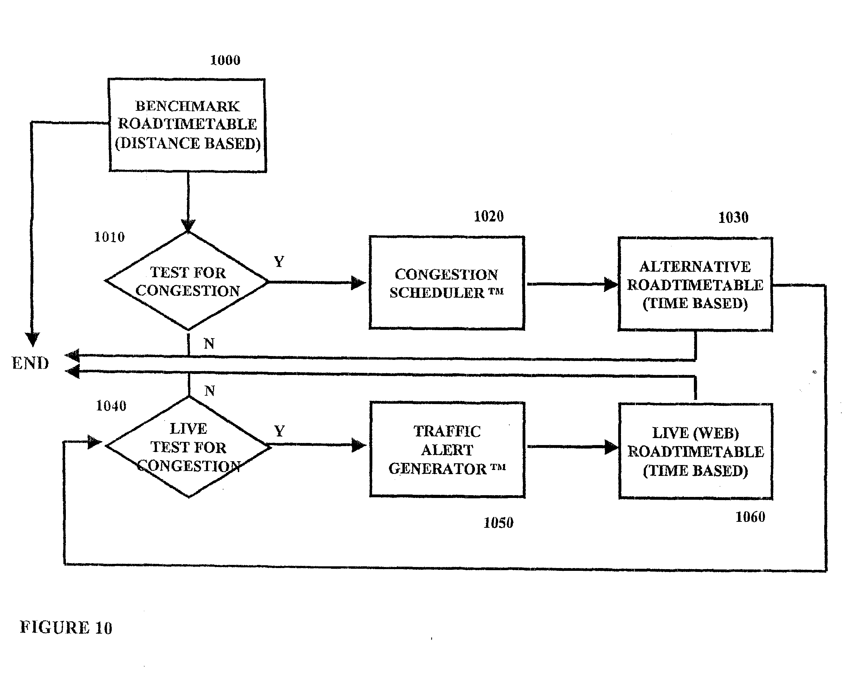

The accuracy of the database provided by the Benchmark Road Timetable ^{™} module is further improved, as shown in the embodiment of Fig. 10, by use of the Congestion Scheduler ^{™} 1020, which updates route times and offers the shortest time journey between the OP 610 and the DP 660; and by use of the Traffic Alert Generator ^{™} 1050, which updates the route in real time over the WWW (World Wide Web) based upon local traffic flash reports and real time FVD ^{™} data.

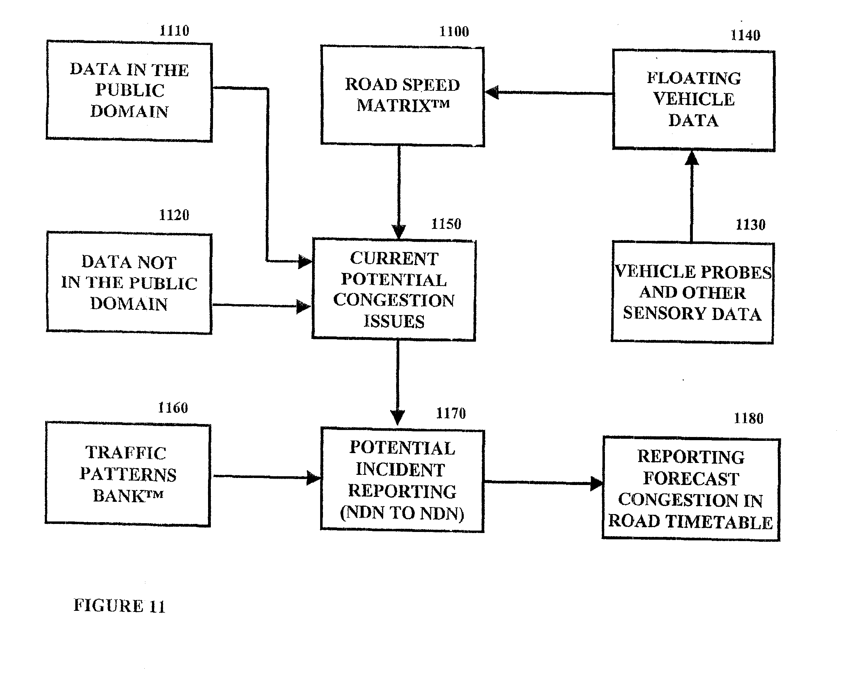

In accordance with an embodiment of the invention, the Congestion Scheduler^{™} forecasts potential traffic congestion on particular lengths of road at particular times of the day, and particular days of the week, and estimates travel speed for each type of vehicle. The Congestion Scheduler ^{™} is built up of many elements, as shown in the embodiment of Fig. 11, and is based upon the record of the definition of potential congestion issues 1150. Such issues are identified by means of traffic data in the public domain 1110 (such as actual road works over a stretch of road); or by means of data not in the public domain 1120 (such as information that a wide load is travelling over a particular road length that is known to the police authority and "quoted" by the police as a potential problem); or by means of FVD^{™} data 1140 selected because current readings offer a substantial variance from the average recorded historically. Actual vehicle speeds over the particular road length identified as a potential congestion issue are obtained and verified from a combination of vehicle probes and other sensory data 1130.

In accordance with the embodiment of Fig. 11, where no actual vehicle speeds are available to determine the speed of each vehicle type through the potential congestion issue in each time bucket, then an approximation of vehicle speed is used from the Traffic Patterns Bank^{™}. The Traffic Patterns Bank^{™} is a record of vehicle speeds in each time bucket over particular stretches of road that define vehicle flow characteristics and type of congestion that has occurred. Roads with similar characteristics are selected to determine the data from the Traffic Pattern Bank ^{™}

In the embodiment of Fig. 11, the Congestion Scheduler ^{™} defines the type of incident on a road length from one NDN to all adjacent NDNs 1170 and forecasts the travel speed of each vehicle type in each time bucket 1150 by day of the week. Typical issues resulting in traffic congestion may include, but are not limited to, peak traffic volumes, school start and finish times, road works, events (particularly sporting and cultural), and weather (floods or high winds).

In accordance with an embodiment of the invention, for simplicity of reporting severity of congestion on a particular road length (one NDN to an adjacent NDN or another NDN), each issue may be defined by effect into one or more categories. For example, the categories may be as follows:

| CATEGORY | CONGESTION EFFECT | DESCRIPTION |
|---|---|---|
| One | 50% of maximum legal speed limit for type of vehicle per defined road length | Congested |
| | | |
| Two | 30% of maximum legal speed limit for type of vehicle over defined road length | Slow |
| | | |
| Three | 20% of maximum legal sped limit for type of vehicle over defined road length | Very Slow |
| | | |
| Four | Less than 3mph over defined road length | Stationary |
| | | |
| Five | Defined road length not available to traffic | Closed |

By combining the congestion issue, effect, and a single or series of time buckets by day of the week, it is possible, in accordance with an embodiment of the invention, to give a short description of any potential traffic congestion; for example:
**"A6 at Westhoughton road works from 0700 hrs to 1600 hrs today may lead to very slow traffic in both directions".**

Congestion issues, therefore, may be defined by location (NDN to NDN), type of issue, time, day of the week, effect and direction of travel affected.

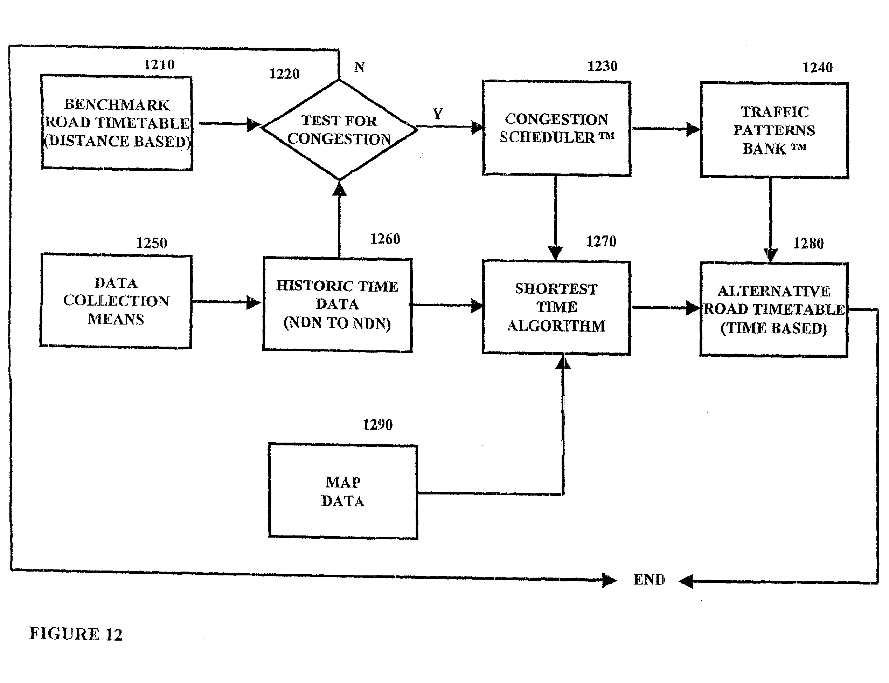

In accordance with an embodiment of the invention, the Congestion Scheduler^{™} improves the accuracy of the forecast speed in the Road Timetable ^{™} and provides the first alternative time based routes. The process, as described in the embodiment of Fig. 12, starts with the Benchmark Road Timetable ^{™} module 1210 and tests the selected shortest path for congestion 1220 by means of the list of congestion issues 1230 or the Traffic Pattern Bank ^{™} 1240. All data collection means 1250 are used to verify and validate traffic congestion in historic terms 1260 to use in a shortest time algorithm module 1270 which, by means of digital map data 1240, provides a shortest time route from an OP 610 to a DP 660 and an alternative time based Road Timetable ^{™} 1280.

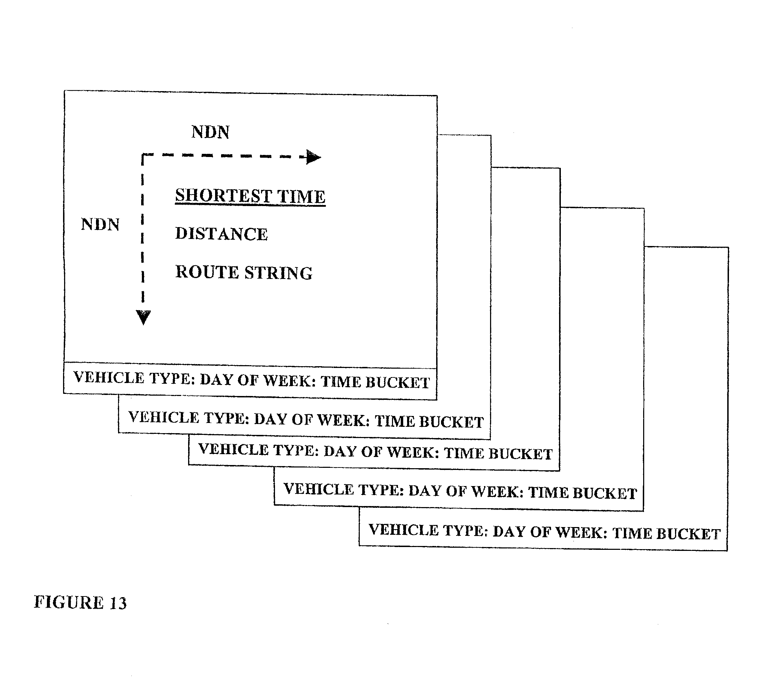

The alternative time based Road Timetable ^{™} is also presented as a database - see the embodiment of Fig. 13 - in a similar manner to the Benchmark Road Timetable ^{™}. However, in this instance shorter travel time is the dominant factor in the matrix.

By means of comparison of the "time" solution from the Benchmark Road Timetable ^{™} module and the "time" solution from the second Road Time Table^{™} with the Congestion Scheduler^{™} it is possible to calculate the "forecast delay," in accordance with an embodiment of the invention. Some radio stations prefer to describe traffic congestion in terms of "forecast delay" in minutes to assist those currently traveling or potentially traveling along a route which includes the congested area.

An embodiment of the invention also considers the impact of severe congestion on one route length with traffic patterns on adjacent roads. Thus, any routes passing on adjacent routes to known traffic congestion will have their route speed down graded to allow for the transfer of traffic from one road to another. The Traffic Pattern Bank^{™} selects all potential routes which could be affected in the event of congestion.

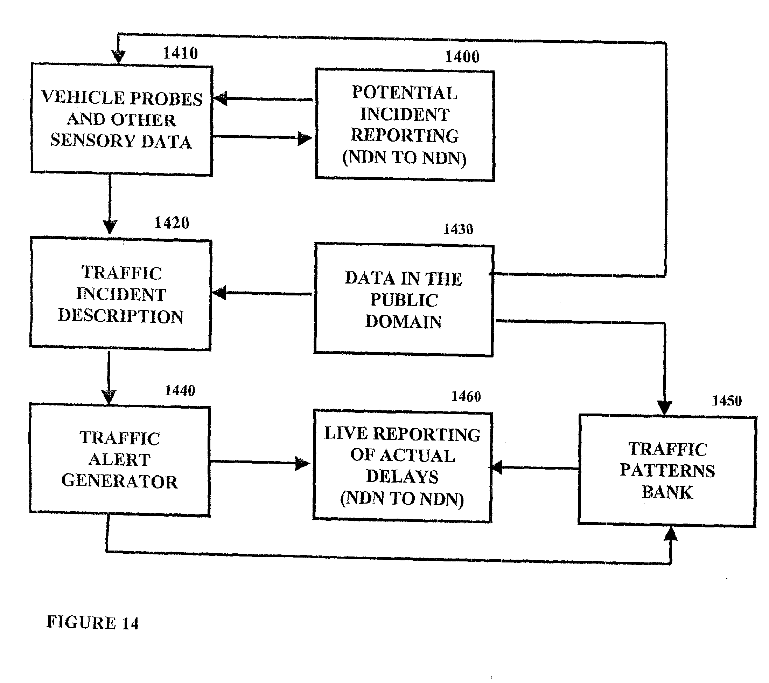

In accordance with an embodiment of the invention, even greater additional accuracy is required for real-time traffic forecasting insofar as short-term influences such as weather (for example, fog), traffic accidents or damage to the road surface (for example, a burst water main) may have a profound impact upon traffic speeds. The Traffic Alert Generator ^{™}, described in the embodiment of Fig. 14, addresses real-time traffic issues and allows up-to-date traffic information to be used for a real-time Road Timetable ^{™} offered over the WWW.

In the embodiment of Fig. 14, the Traffic Alert Generator ^{™} collects lists of potential short-term incidents 1400, from police or other sources (for example, Automobile Association patrol staff); and from data in the public domain 1430, from such sources as broadcasts on local or national radio. In addition, vehicle probes and other sensory data 1410 are used to verify the reports and establish the current speed of traffic on the road length affected. The combination of such information is consolidated as a traffic incident description 1420, and again the congestion effect may be used to give a short description of known traffic congestion, for example:
**"A6 at Westhoughton a traffic accident in the last hour has led to stationary traffic in both directions 2 miles northbound towards Chorley and 4 miles southbound towards Swinton".**

The dissemination of this information in real-time either through RDS-TMC (Radio Data System - Traffic Messaging Channel) or direct to a mobile telephone or computer by GSM (Global Systems for Mobiles) or GPRS (General Packet Radio Services) is known as the Traffic Alert Generation 1440. The information is also reported into the real-time Road Timetable ^{™} in order to re-calculate either the time to be taken to undertake and complete a Benchmark Road Timetable ^{™} route, or to determine the shortest time route given the traffic incidents.

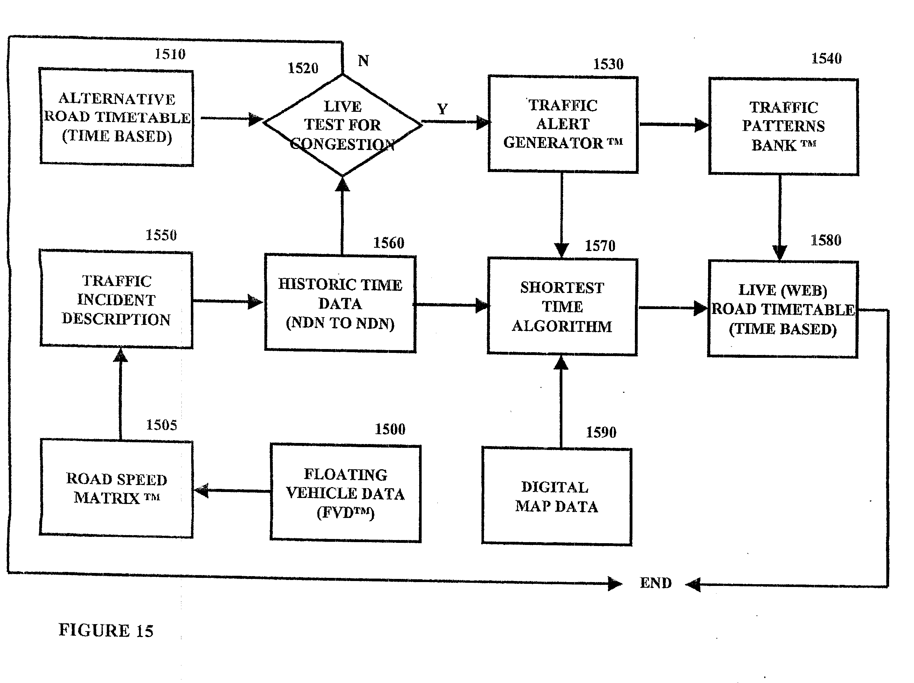

Fig. 15 describes the application of the Traffic Alert Generator ^{™} for real-time reporting of the Road Timetable ^{™}, in accordance with an embodiment of the invention. The process starts with the alternative (time-based) Road Timetable ^{™} 1510, which is tested for real-time data on congestion 1520. Data in terms of traffic incident descriptions 1550 is collected locally and converted to real-time data 1560 to recognize routes affected by real-time issues and passed to the Traffic Alert Generator^{™} 1530. A validation process checks with FVD ^{™} 1500 that current traffic speeds have substantially deteriorated otherwise data is taken from the Traffic Patterns Bank^{™} 1540 to replace historic data. A shortest time algorithm 1570 and digital map data 1590 are used to calculate a line time based Road Timetable ^{™} 1580 which is immediately available on the Worldwide Web. This on-line (WWW) Road Timetable ^{™} 1580 is continuously up-dated for short-term local congestion issues; then, when through the FVD^{™} 1500 vehicle speeds are returned to normal (the historic average), the incident is disregarded. However, a database of such short-term local issues is maintained as part of the Traffic Patterns Bank ^{™} 1540 for use on other occasions should a similar situation arise.

The various apparatus modules described herein may be implemented using general purpose or application specific computer apparatus. The hardware and software configurations indicated for the purpose of explaining the preferred embodiment should not be limiting. Similarly, the software processes running on them may be arranged, configured, or distributed in any manner suitable for performing the invention as defined in the claims.

A skilled reader will appreciate that, while the foregoing has described what is considered to be the best mode, and where appropriate, other modes of performing the invention, the invention should not be limited to the specific apparatus configurations or method steps disclosed in this description of the preferred embodiment. Those skilled in the art will also recognize that the invention has a broad range of applications, and the embodiments admit of a wide range of modifications without departing from the inventive concepts.

## Claims

1. A method for providing traffic information, the method comprising:
pre-determining at least a portion of a recommended most economic route for a vehicle between an origin point and a destination point;
storing the pre-determined portion of the recommended most economic route in a rapid access means in a digital storage means; and
accessing the rapid access digital storage means for use in responding to a user request for traffic information for a journey between the origin point and the destination point, wherein the recommended most economic route minimises a journey cost between the origin point and the destination point.

2. A method according to claim 1, wherein the most economic route includes the lowest cost route.

3. A method according to claim 2, wherein determining the lowest cost route comprises a calculation including data on fixed costs associated with the vehicle.

4. A method according to claim 3, wherein a fixed cost associated with the vehicle comprises a road fund licence cost.

5. A method according to any of claims 2 to 4, wherein determining the lowest cost route comprises a calculation including data on variable costs associated with the vehicle.

6. A method according to claim 5, wherein a variable cost associated with the vehicle comprises a fuel cost.

7. A method according to any of claims 2 to 6, wherein determining the lowest cost route comprises a calculation including data on driver costs.

8. A method according to any of claims 2 to 7, wherein determining the lowest cost route comprises a calculation including data on costs associated with a route available for the vehicle.

9. A method according to claim 8, wherein costs associated with a route available for the vehicle comprise one or more of: a road toll; a bridge toll; a congestion charge.

10. A method according to claim 1, wherein the pre-determined portion of the recommended most economic route comprises a route between a first network decision node, for the origin point, and a second network decision node, for the destination point;
and wherein the first and second network decision nodes are nodes, of a network of digital map nodes, that correspond to key transportation links.

11. A method according to claim 1, wherein the rapid access means comprises a look-up table.

12. A method according to claim 1, wherein pre-determining at least a portion of the recommended most economic route comprises determining a shortest time route between the origin point and the destination point.

13. A method according to claim 1 or 12, wherein pre-determining at least a portion of the recommended most economic route comprises determining a shortest distance route between the origin point and the destination point.

14. A system for providing traffic information, the system comprising:
a route determination processor for determining, with reference to a first network of geographical boundaries and a second network of digital map nodes, a recommended most economic route for a vehicle between an origin point and a destination point; wherein the recommended most economic route is defined by the lowest cost route between the origin point and the destination point;
a rapid access matrix comprising a shortest distance route string with a corresponding distance, time, and cost and a shortest time route string with a corresponding time, distance and cost.
and
a transmitter for transmitting the recommended most economic route to a user.

15. A system according to claim 14, wherein information stored to enable lowest cost route calculations comprises data on fixed costs associated with the vehicle.

16. A system according to claim 15, wherein a fixed cost associated with the vehicle comprises a road fund licence cost.

17. A system according to any of claims 14 to 16, wherein information stored to enable lowest cost route calculations comprises data on variable costs associated with the vehicle.

18. A system according to claim 17, wherein a variable cost associated with the vehicle comprises a fuel cost.

19. A system according to any of claims 14 to 18, wherein determining the lowest cost route comprises a calculation including data on driver costs.

20. A system according to any of claims 14 to 19, wherein information stored to enable lowest cost route calculations comprises data on costs associated with a route available for the vehicle.

21. A system according to claim 20, wherein a costs associated with a route available for the vehicle comprise one or more of: a road toll; a bridge toll; a congestion charge.

22. A system according to claim 14, wherein the route determination processor comprises means for determining the recommended most economic route by determining: a set of local decision nodes comprising a first local decision node, for the origin point, and a second local decision node, for the destination point; and a set of network decision nodes comprising a first network decision node, for the origin point, and a second network decision node, for the destination point;
wherein the set of local decision nodes corresponds to links on the second network, and the set of network decision nodes corresponds to key transportation links on the second network;
and wherein the origin point and destination point are specified with reference to geographical boundaries on the first network.

23. A system according to claim 14, wherein the geographical boundaries comprise a set of postcodes.

24. A system according to claim 14, wherein the recommended most economic route minimises a journey distance between the origin point and the destination point.

25. A system according to claim 14 or 23, wherein the recommended most economic route minimises a journey time between the origin point and the destination point.

26. A system according to claim 22, wherein the set of network decision nodes comprises further network decision nodes in addition to the first and second network decision nodes.

27. A system according to claim 22, wherein at least one of the origin point, the destination point, and a member of the set of local decision nodes is also a member of the set of network decision nodes.

28. A system according to claim 22, further comprising:
a route pre-determination processor for pre-determining at least a portion of a recommended most economic route between an origin point and a destination point;
a rapid access means in a digital storage means, for storing the pre-determined portion of the recommended most economic route; and
a user request processor for accessing the rapid access means for use in responding to a user request for traffic information for a journey between the origin point and the destination point.

29. A system according to claim 27, wherein the rapid access means comprises a look-up table.

30. A system according to claim 22, further comprising:
a real time data receiver for receiving real time data relating to real time vehicle location from a plurality of vehicle-bound probes; and
a matrix, in a digital storage means, relating vehicle speeds to at least a plurality of time of day divisions and a plurality of routes, based on the real time vehicle location data.

31. A system according to claim 30, wherein the plurality of vehicle-bound probes includes at least one mobile telephone.

32. A system according to claim 30, further comprising:
a first matrix of recommended most economic routes, in a digital storage medium, relating a plurality of recommended most economic routes to at least a plurality of time of day divisions, based on the matrix of vehicle speeds.

33. A system according to claim 32, wherein the first matrix of recommended most economic routes is based on the matrix of vehicle speeds with outlier vehicle speeds, and vehicle speeds related to unforecastable events, removed using statistical analysis.

34. A system according to claim 32, wherein the first matrix of recommended most economic routes comprises a plurality of route matrix elements, each route matrix element corresponding to a pairing of an origin point with a destination point, and comprising: a route string, a shortest distance corresponding to the route string, a time corresponding to the route string, and a cost corresponding to the route string.

35. A system according to claim 34, wherein the route matrix elements further comprise entries for a plurality of possible vehicle types.

36. A system according to claim 32, further comprising:
a congestion scheduler for identifying, in real time, an area of traffic congestion between the origin point and the destination point; and
a matrix processor for determining an alternative, second matrix of recommend most economic routes based on the identified area of traffic congestion.

37. A system according to claim 36, wherein the congestion scheduler comprises means for identifying the area of traffic congestion using both public domain data and non-public domain data.

38. A system according to claim 36, wherein the congestion scheduler comprises means for identifying the area of traffic congestion using a database of traffic patterns.

39. A system according to claim 36, wherein the congestion scheduler comprises means for identifying the area of traffic congestion by determining whether real time vehicle location data from a plurality of vehicle-bound probes correspond to a pre-determined level of variance from historic real time vehicle speeds.

40. A system according to claim 36, further comprising a transmitter for transmitting a message to a user identifying a cause of the area of traffic congestion.

41. A system according to claim 36, wherein the matrix processor comprises means for determining the second recommended most economic route matrix by determining a route having a shortest time between at least one pairing of origin point and destination point.

42. A system according to claim 34, further comprising a traffic alert generator for transmitting traffic alert information to a user in real time, the transmission comprising at least one of: a traffic messaging channel on a radio data system; a message to a mobile telephone; or a display of data over the Internet.

43. A computer program product comprising program code means adapted to control the method of claim 1.
